# EUROPEAN PATENT APPLICATION

(11) **EP 2 218 429 A1**
(43) Date of publication of application: **18.08.2010**
(21) Application number: 10075056.1
(22) Date of filing: 11.02.2010
(51) Int. Cl.: A61G 3/06, B60P 1/44, B60R 3/02

(54) **Asymmetrical cassette lift to be mounted on a vehicle**

(30) Priority: 16.02.2009 BE 200900104
(71) Applicant: Dhollandia, Naamloze Vennootschap, 9111 Sint-Niklaas ( Belsele) (BE)
(72) Inventor: Dhollander, Jan, 9160 Lokeren (BE)
(74) Representative: Donné, Eddy

(57) **Abstract**

Asymmetrical cassette lift to be mounted on a vehicle, comprising a slide member to which by means of lifting arms a vertically adjustable horizontal platform is attached and to which along one edge an access ramp has been hingedly provided to bridge the gap between the loading floor of the vehicle and the platform, where a mechanism is provided that automatically causes the access ramp to tilt due to the motion of the lifting arms and of the platform between an upright position wherein the platform rests on the ground and a horizontal position wherein the platform is at the level of the loading floor of the vehicle.

## Description

The present invention refers to an asymmetrical cassette lift to be mounted on a vehicle.

Cassette lifts for mounting on vehicles are already known.

They offer the advantage that they can be attached to or built into vehicles. This makes their use ideal when the vehicles are modified or designed to transport people in a wheelchair. This applies both to privately owned vehicles and to public transport vehicles.

Such cassette lifts consist of a guide that can be affixed to or inside the vehicle; this guide contains an extendible slide member, which can be locked into the guide, at minimum in the fully extended and retracted positions.

In the slide member's extended position, a platform can be moved up and down, thus enabling it to transport goods or persons into or out of the vehicle.

To this end, the cassette lift is also provided with an access ramp. When the platform of the cassette lift is at the same height as the vehicle's loading floor, this ramp will be roughly horizontal and will form a bridge between the platform and the loading floor, allowing persons or goods to be transported into or out of the vehicle easily.

In symmetrical cassette lifts, which are cassette lifts where the guide is mounted at about half of the height between the ground and the loading floor of the vehicle, the inclination of the access ramp can be attained in a familiar manner.

However, a disadvantage of these known symmetrical cassette lifts is that their installation in a vehicle often takes up space that could be used usefully for other purposes, for example to store luggage.

On the other hand, cases are known in which the cassette lift can be mounted in a space that is otherwise unused. An example thereof is the space above the wheels in buses, where a cassette lift could be mounted.

However, this might require the use of an asymmetrical cassette lift, whereby the difference in height between the guide and the ground is significantly greater than the difference in height between the guide and the loading floor of the vehicle, or, in other words, whereby the difference in height that needs to be bridged from the position of the guide to the ground is much greater than the difference in height between the height of the guide and the height of the loading floor.

A disadvantage thereof, however, is that the inclination of the access ramp cannot be achieved in the known manner. During the upwards movement of the platform, the ramp must remain directed upwards long enough to prevent the guide from colliding with the ramp during this motion.

In principle, the access ramp can be made as a separate plate that is placed, when the cassette lift is in the uppermost position, to form a bridge between the loading floor and the platform.

One disadvantage of this method is that for each use of the cassette lift additional action is required for placing the access ramp in place and removing it again.

Since this must be done in the uppermost position of the cassette lift, this has to be done from the inside of the vehicle. It is clear that the additional movements into and out of the vehicle, and the loss of time related to this, are major disadvantages of this solution.

Another disadvantage is that the access ramp is constructed as a separate part. This implies that the ramp can easily be forgotten or become lost. Storing this separate part can also pose problems and it may cause noise while driving, if the part is not properly secured. The present invention aims to offer a solution to at least one of the aforesaid and other disadvantages.

To this end, the invention refers to an asymmetrical cassette lift for mounting on a vehicle, consisting of a guide to attach the cassette lift to or in the vehicle, and a retractable and extendible slide member to which lifting arms are hingedly connected with one end for the height adjustment of a platform that remains level and that is hingedly connected to the other end of the lifting arms, and whereby an access ramp is provided which is hingedly connected with one edge to bridge the gap between the vehicle's loading floor and the platform, whereby a mechanism is provided that automatically causes the ramp to tilt due to the motion of the lifting arms and of the platform, between an upright position corresponding to a position of the cassette lift whereby the platform rests on the ground or rests almost on the ground and a horizontal or almost horizontal position corresponding to the position of the cassette lift whereby the platform is or almost is at the level of the vehicle's loading floor, wherein this mechanism is formed by a lever connected on one end by means of a first hinge shaft with the slide member, and connected by means of a second hinge shaft to the lifting arms, wherein this second hinge shaft is located at a distance from the first hinge shaft, and whereby this second hinge shaft can slide freely along the longitudinal direction of the lever and whereby the access ramp is held against the free end of the lever by means of a spring during at least part of the vertical motion.

Thanks to this mechanism, it is possible to achieve an extensive tilting motion of the access ramp, with a minor change in the position of the loading arms, from the position where the platform is at the height of the guide to the position at the level of the loading floor.

One major advantage resulting from this is that this mechanism allows to provide in a simple way a construction to operate the access ramp in the case of an asymmetrical cassette lift, where the difference in height between the level of the guide and the level of the loading floor is limited, or at least much less than the difference in height between the level of the guide and the level of the ground.

Another advantage is that the access ramp is an integrated part of the cassette lift mechanism and that the tilting of the access ramp to the correct position occurs automatically.

As a result, no additional movements are needed to place the ramp, which in turn leads to time savings.

A further considerable advantage is that the solution is achieved by using very simple mechanical means and does not require additional controls.

Another advantage of an integrated access ramp is that the disadvantages related to its use as a separate part are mitigated automatically.

With the intention of showing the features of the invention better, is given below as an example without any limiting character, a preferred embodiment described of an asymmetrical cassette lift for mounting on a vehicle, in accordance with the invention, referring to the enclosed drawings, in which:
figure 1 represents schematically and in perspective an asymmetrical cassette lift for mounting on a vehicle according to the invention;
figure 2 represents the cassette lift, of figure 1, in a position where the slide member has been slid from the guide;
figures 3 to 6 show side views of a cassette lift as in figure 1, for different positions of the platform.

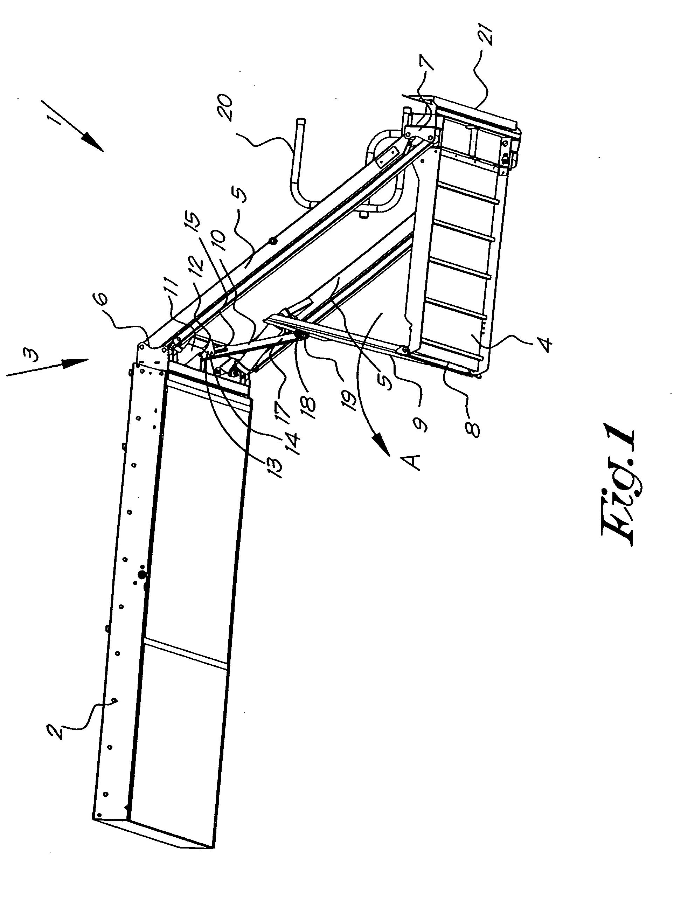

The asymmetrical cassette lift 1 to be mounted on a vehicle, as shown in figure 1, comprises a guide 2 by which the cassette lift 1 can be mounted on or to a vehicle and a slide member 3 that is retractable and extendible in relation to this guide 2.

The slide member 3 is provided with a horizontal platform 4 on which goods or people can be placed to carry them up or down.

This platform 4 is connected to the slide member 3 by means of lifting arms 5. These lifting arms 5 are hingedly connected with on one end 6 to the slide member 3 and are hingedly connected with the other end 7 to the platform 4, where the platform 4 in the example shown has its free edge 8 directed towards the guide 2.

To this edge 8 of the platform 4 an access ramp 9 has been hingedly attached.

The cassette lift 1 is provided with a mechanism that causes this access ramp 9 to tilt automatically when the lifting arms 5 and the platform 4 move.

This mechanism contains at least one spring, applying force in the direction of arrow A to the access ramp 9 when the latter is brought into the working position.

This mechanism also comprises a lever 10, connected by one end 11, via a hinge shaft 12, to the slide member 3.

A protrusion 13 is connected firmly to the lifting arms 5 and is, in this example, connected to a crossbeam between the two lifting arms 5. This protrusion 13 is provided with a second hinge shaft 14.

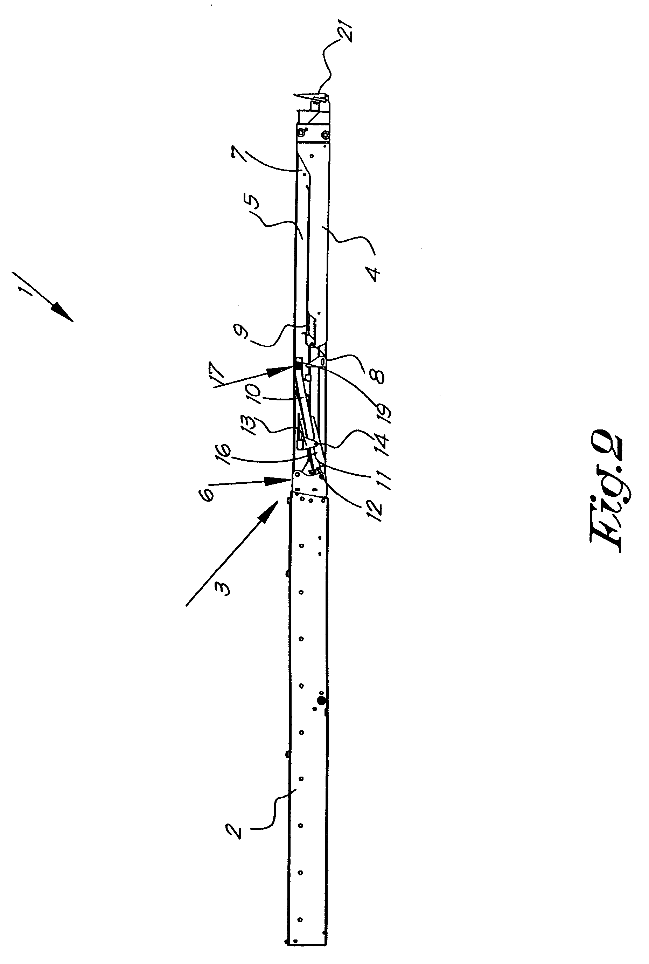

In the embodiment as shown in Figure 1, this second hinge shaft 14 is fitted in a slot 15, provided inside the lever 10, or, alternatively, as shown in figure 2, in an undercut 16. By means of this connection between the lever 10 and the lifting arms 5 the position of the lever 10 is determined by the position of the lifting arms 5. As a result, the lever 10 cannot be freely rotated around the first hinge shaft 12 and the movement is guided by the movement of the lifting arms 5.

By correctly choosing the length of the lever 10 and of the access ramp 9, the free end 17 of the lever 10 can come into contact with the access ramp 9, which is kept in contact with its underside to the free end 17 of the lever 10 by means of the aforementioned spring.

The point of contact 18 between the access ramp 9 and the lever 10 varies depending on the position of the lifting arms 5.

Possibly, means can be provided to reduce the friction between the access ramp 9 and the lever 10. In the embodiment as shown in the figures, these means are provided in the form of a roller or wheel 19 provided on the free end 17 of the lever 10.

In the embodiment as shown in the figures, two foldable safety railings or fences 20 and a raised edge 21 have also been provided. These are of no importance for the invention.

The operation of an asymmetrical cassette lift 1 for mounting on a vehicle is very easy and is as follows.

Figure 2 shows an asymmetrical cassette lift 1 where the slide member 3, together with the lifting arms 5, the platform 4 and the access ramp 9 has been slid horizontally out of the guide 2 to bring the platform 4 on the outside of the vehicle to the level of the guide 2.

In this position of the asymmetrical cassette lift 1 the access ramp 9 has been tilted down manually to a horizontal position such that the access ramp rests on top of the platform 4.

The mounting points of the spring, that apply a force to the access ramp 9 according to arrow A, when the latter is in the working position, can be chosen in such a way that, in the downward position of the access ramp 9, this spring will pull the ramp 9 towards the platform 4 and in this way hold it in its downward position.

To slide in the slide member 3 the two foldable safety railings or fences 20 are also tilted down. During the operation of the cassette lift, these safety railings or fences 20 prevent goods or people from falling off the side of the asymmetrical cassette lift 1.

This way, the slide member 3, including the platform 4, the folded down access ramp 9 and the safety railings or fences 20, can be moved into or out of the guide 2.

When the slide member 3 has been slid completely into the guide 2, the raised edge 21 may act as a covering plate or as a support for the covering plate, which closes off the opening of the asymmetrical cassette lift 1.

The drive to slide the slide member 3 into or out of guide 2 is often operated by means of an electrical motor. It is possible in this case to lock the slide member's 3 inward and outward sliding motions by providing means to short-circuit this motor.

From the extended and locked position, the platform 4 of the asymmetrical cassette lift 1 may be moved upwards or downwards by means of the lifting arms 5.

The movements of the lifting arms 5 and of the platform 4 are usually driven by a hydraulic system.

The lifting arms 5 are constructed in such a way that the platform 4 remains horizontal during these movements.

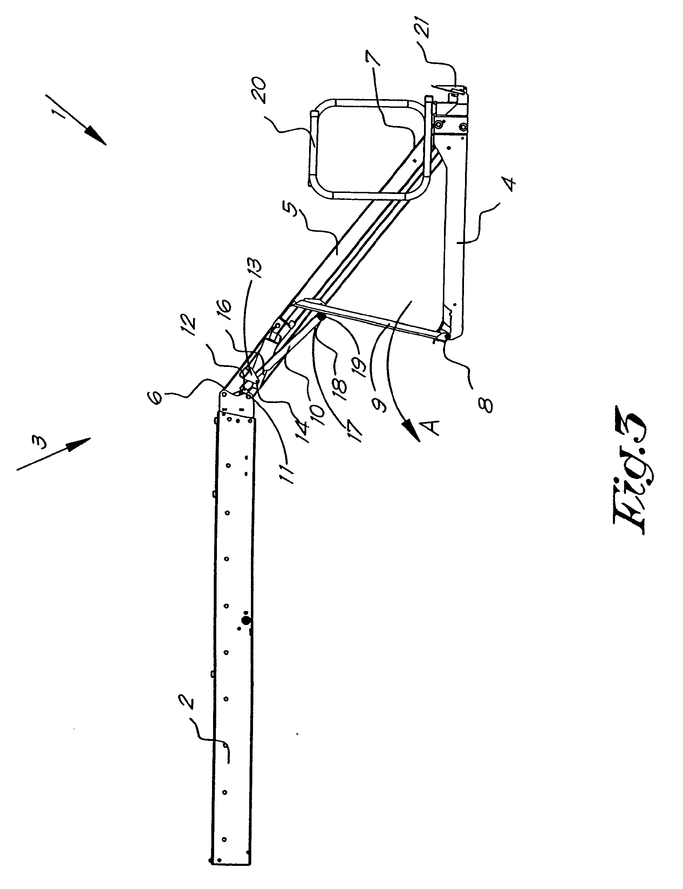

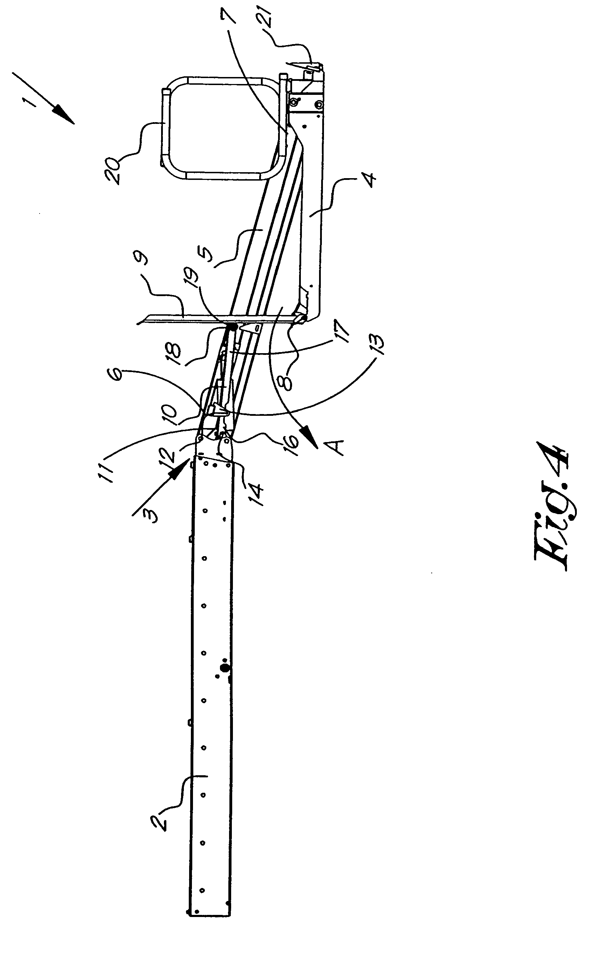

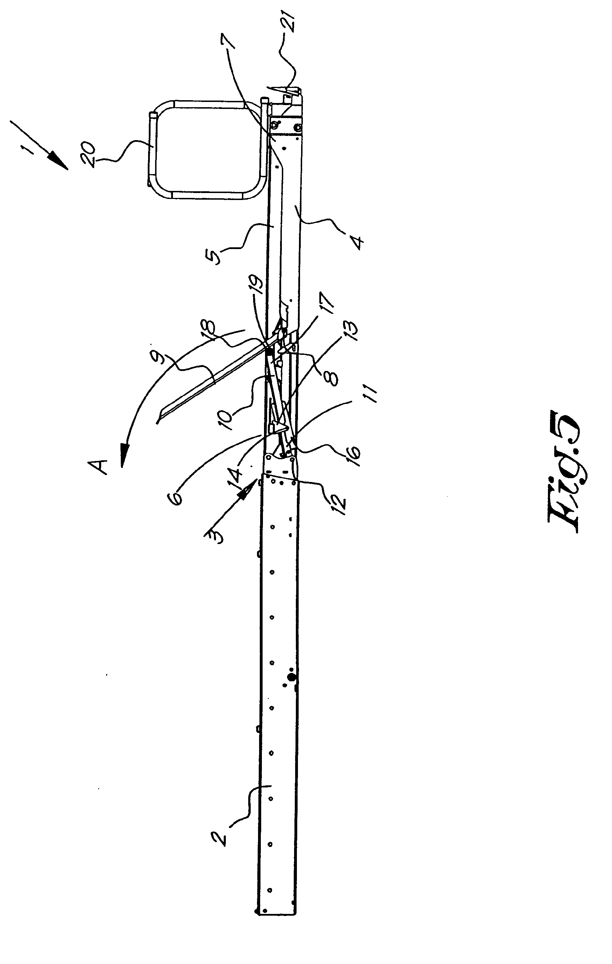

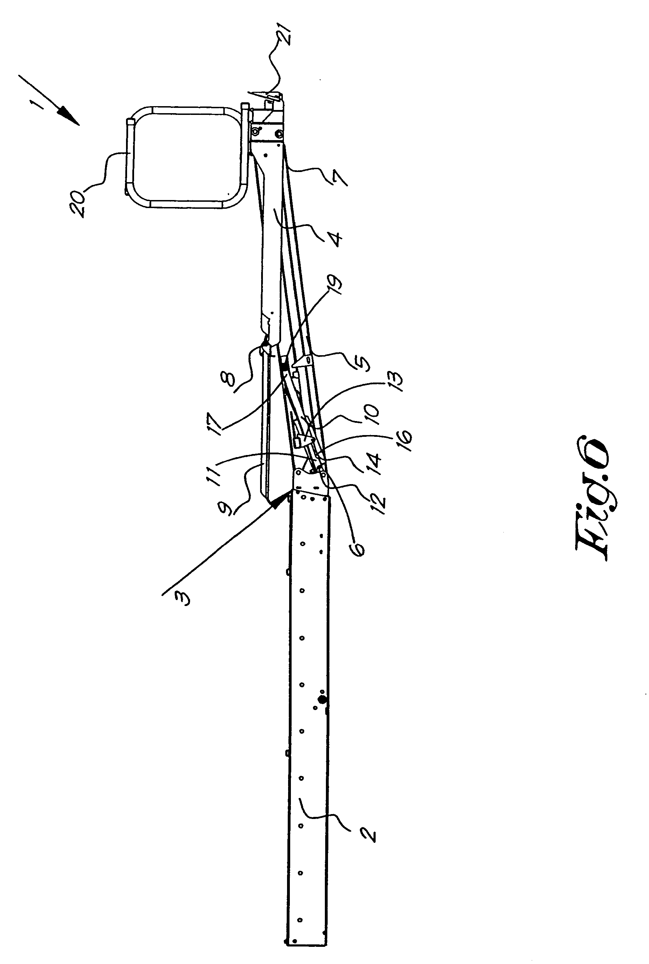

Figures 3 to 6 give a side-view of the asymmetrical cassette lift 1 in the situation where the platform 4 has been moved to different heights. The figures clearly illustrate how the access ramp 9 is automatically tilted during the motion of the asymmetrical cassette lift 1 from a practically vertical position, when the cassette lift 1 is set to the lower position, to a practically horizontal position, when the cassette lift 1 is almost at the level of the vehicle's loading floor, and thus forms a bridge between the loading floor and the platform 4.

The movements of the asymmetrical cassette lift 1 are characterised by the fact that the height difference of the platform 4 between a neutral position, wherein the platform 4 is at or close to the height of the guide 2 of the asymmetrical cassette lift 1, and the lowest position of the asymmetrical cassette lift 1, wherein the platform 4 rests on or close to the ground, is greater than the height difference of the platform 4 between this neutral position and the highest position of the asymmetrical cassette lift 1, when the platform 4 is at or close to the level of the vehicle's loading floor. In this position, the access ramp 9 will bridge the gap between the vehicle's loading floor and the platform 4.

In practical embodiments, the difference in height between the aforementioned neutral position and the aforementioned highest position will be less than or equal to half of the height difference between the aforementioned lowest position and the aforementioned highest position. In many cases, this will be only one third, or even less.

In this configuration, specific precautions must be taken to prevent the access ramp 9 from colliding with the guide 2 during the motion of the platform 4 or colliding with the carriage of the vehicle to which the cassette lift has been attached.

To this end, the aforementioned mechanism is dimensioned in such a way that the access ramp 9 remains directed upwards during almost the entire upward movement of the lifting arms 5 and the platform 4 and the access ramp will only tilt from the vertical position to a mostly horizontal position during the last stage of this upward motion, just before reaching the highest position i.e. at the level of the loading floor, coming to rest on top of the loading floor.

When the access ramp 9 is put in the working position, the spring will push against the access ramp 9 in the direction of the arrow A.

The access ramp 9, however, is held back by the lever 10. The lever 10 hereby exerts applies a force on the access ramp 9 in equilibrium with the spring's force.

The rotation of the lever 10 in relation to the guide 2 is determined by the position of the second hinge shaft 14 on the lever 10. Thus, this rotation is related to the height of the platform 4 through the position of the lifting arms 5.

While the lifting arms 5 move, the second hinge shaft 14 will slide along the undercut 16 in the lever 10 or in the slot 15 provided for this purpose.

When the platform 4 - and, therefore, with it the edge 8 to which the access ramp 9 has been mounted - achieves a higher position, the contact point 18 of the free end 17 of the lever 10 with the access ramp 9 will slide in the direction of the edge 8.

At a certain height, the contact between the access ramp 9 and the free end 17 of the lever 10 will be broken. The access ramp 9 will then be in an almost horizontal position. Mechanical means prevent the access ramp 9 from rotating further as a result of the force applied by the spring.

It is clear that the second hinge shaft 14 does not necessarily need to be guided in a slot 15 or undercut 16, but that the underside of the lever 10 may provide such a guide.

It is noted that the distance between the first hinge shaft 12 and the second hinge shaft 14 on the lever 10 for all of the positions of the cassette lift 1 is less than the distance between the second hinge shaft 14 and the free end 17 of the lever 10.

The present invention is in no way limited to the particular implementation described as an example and shown in the figures, but an asymmetrical cassette lift to be mounted on a vehicle may be constructed in many forms and sizes without going beyond the scope of the invention.

## Claims

1. Asymmetrical cassette lift (1) for mounting on a vehicle, consisting of a guide (2) with which the cassette lift (1) can be attached in or to the vehicle, and a slide member (3) that can be slid in or out to which lifting arms (5) are hingedly connected with one end (6) for adjusting the height of a permanently horizontal platform (4) hingedly connected to the other end of the lifting arms (5) and where an access ramp (9) is provided which is along one edge (8) hingedly mounted on the platform (4) to bridge the gap between the loading floor of the vehicle and the platform (4), **characterised in that** a mechanism is provided that automatically causes the access ramp (9) to tilt due to the motion of the lifting arms (5) and the platform (4) between an upright position corresponding to a position of the cassette lift (1), wherein the platform (4) rests on or almost on the ground, and a horizontal position or almost horizontal position corresponding to a position of the cassette lift (1), wherein the platform (4) is at or almost at the level of the loading floor of the vehicle, and wherein this mechanism comprises a lever (10) connected on one end (11) via a first hinge shaft (12) to the slide member (3) and connected via a second hinge shaft (14) to the lifting arms (5), where this second hinge shaft (14) is located at a distance from the first hinge shaft (12) and where this second hinge shaft (14) can slide freely along the longitudinal direction of the lever (10) when the cassette lift (1) moves and wherein the access ramp (9) is held by a spring against the free end (17) of the lever (10) during of at least part of the vertical movement.

2. Asymmetrical cassette lift (1) according to claim 1, **characterised in that** the aforementioned mechanism is proportioned in such a way that the access ramp (9) remains practically upright when the cassette lift (1) moves between a position where the platform (4) rests on or nearly on the ground and a position where the platform (4) is close to the height of the guide (2) and such that the tilting of the access ramp (9) from this practically upright position to a horizontal or nearly horizontal position occurs mostly when the cassette lift (1) moves between a position where the platform (4) is close to the height of the guide (2) and a position where the platform (4) is at the level of the vehicle's loading floor.

3. Asymmetrical cassette lift (1) according to claim 1 or 2, **characterised in that** the distance between the first hinge shaft (12) and the second hinge shaft (14) on the lever (10) for all positions of the cassette lift (1) is less than the distance between the second hinge shaft (14) and the free end (17) of the lever (10).

4. Asymmetrical cassette lift (1) according to one of the preceding claims, **characterised in that** the second hinge shaft (14) may slide in a slot (15) provided along a part of the lever (10).

5. Asymmetrical cassette lift (1) according to one of the preceding claims, **characterised in that** the second hinge shaft (14) hooks into an undercut (16) provided along a part of the length of the lever (10).

6. Asymmetrical cassette lift (1) according to one of the preceding claims, **characterised in that** the free end (17) of the lever (10) is fitted with means to reduce the friction between the access ramp (9) and the lever (10).

7. Asymmetrical cassette lift (1) according to claim 6, **characterised in that** the means to reduce the friction between the access ramp (9) and the lever (10) are realised as a roller or wheel (19) provided on the free end (17) of the lever (10).

8. Asymmetrical cassette lift (1) according to one of the preceding claims, **characterised in that** the difference in height of the platform (4) between a neutral position, in which the platform (4) is close to the level of the guide (2) of the cassette lift (1), and the lowest position of the cassette lift (1) wherein the platform (4) rests on or almost on the ground, is greater than the difference in height of the platform (4) between this neutral position and the highest position of the cassette lift (1), in which the platform (4) is at or close to the level of the vehicle's loading floor.

9. Asymmetrical cassette lift (1) according to claim 8, **characterised in that** the difference in height between the aforementioned neutral position and the aforementioned highest position is no greater than 50 %, and preferably no greater than 30 % of the difference in height between the aforementioned lowest position and the aforementioned highest position.

10. Asymmetrical cassette lift (1) according to one of the preceding claims, **characterised in that** the access ramp (9) can be tilted to a horizontal position manually, where this access ramp (9) rests above the platform (4) in such a way that the slide member (3), including the platform (4) and thus the tilted access ramp (9) can be slid into the guide (2) .

11. Asymmetrical cassette lift (1) according to claim 10, **characterised in that** the spring for ensuring that the access ramp (9) is held against the lever (10), is dimensioned and provided in such a way that this spring, in the position where the access ramp (9) rests above the platform (4), applies a force or the access ramp (9) that pulls this access ramp (9) towards the platform (4).

12. Asymmetrical cassette lift (1) according to one of the preceding claims, **characterised in that** the sliding of the slide member (3) into and out of the guide (2) is operated by means of an electrical motor, and wherein the inward and outward sliding motion of the slide member (3) is locked by means that allow to short-circuit this electrical motor.
